# EUROPEAN PATENT APPLICATION

(11) **EP 2 506 134 A2**
(43) Date of publication of application: **03.10.2012**
(21) Application number: 12161940.7
(22) Date of filing: 29.03.2012
(51) Int. Cl.: G06F 3/048, G06F 3/033

(54) **Portable terminal apparatus and computer readable medium**

(30) Priority: 29.03.2011 JP 2011071699
(71) Applicant: Casio Computer Co., Ltd., Tokyo 151-8543 (JP)
(72) Inventor: Sato, Takao, Hamura-shi, Tokyo 205-8555 (JP); Tsubonuma, Jun, Hamura-shi, Tokyo 205-8555 (JP)
(74) Representative: Grünecker, Kinkeldey, Stockmair & Schwanhäusser

(57) **Abstract**

There is provided a portable terminal apparatus including a touch display section mounted with a touch panel. The apparatus includes: a touch pad assignment section configured to assign a touch pad region to a specific region in the touch display section; a pointer display section configured to display a touch pad pointer at a specific position on the touch display section when the touch pad region is assigned by the touch pad assigmnent section; a processor configured to execute a specific processing according to a touch operation in the touch pad region; and a touch controller configured to disable a touch operation, when the touch operation is performed in the touch display section other than the touch pad region assigned by the touch pad assignment section.

## Description

### BACKGROUND

### Technical Field

Embodiments described herein relate to a portable terminal apparatus equipped with a touch panel mounted touch display section, and a computer readable medium.

In related large touch panel mounted touch display sections, such as for example a portable terminal apparatus with a touch screen covering substantially the whole surface of a casing, configuration is made such that a finger or pen moves to the actual display position of an object when for example moving or selecting a target object (for example an icon or link data). While this is obviously extremely easy to understand and useful, both from visual and operational perspectives, such a configuration becomes difficult to use in single handed operation. Namely, in single handed operation it is often difficult to move the finger or pen smoothly in situations where there is a large range and the hand is not able to move freely, rendering the apparatus hard to use.

A related proposal provides a touch pad region where a software keyboard can be operated on a display screen in a specific region outside of the region where the software keyboard itself is displayed. In this technology touch operations in the touch pad region are corresponded against key operations on the software keyboard (see JP-A-2010-86064).

In the above technology (the technology of JP-A-2010-86064) it is possible to operate the software keyboard by touch operation in the touch pad region. However, in single handed operation, during the period of time when touch operation is being performed in the touch pad region the software keyboard itself is also sometimes touched, such as by a finger or pen, causing mistaken operation.

### SUMMARY

Embodiments described herein enable mistaken operation to be efficiently suppressed in a state in which a touch pad region has been assigned on a touch display section.

According to one or more illustrative aspects of the present invention, there is provided a portable terminal apparatus including a touch display section mounted with a touch panel. The apparatus includes: a touch pad assignment section configured to assign a touch pad region to a specific region in the touch display section; a pointer display section configured to display a touch pad pointer at a specific position on the touch display section when the touch pad region is assigned by the touch pad assignment section; a processor configured to execute a specific processing according to a touch operation in the touch pad region; and a touch controller configured to disable a touch operation, when the touch operation is performed in the touch display section other than the touch pad region assigned by the touch pad assignment section.

According to one or more illustrative aspects of the present invention, there is provided a computer-readable medium storing a program for causing a computer to perform predetermined operations. The operations include: (a) assigning a touch pad region to a specific region in a touch display section; (b) displaying a touch pad pointer at a specific position on the touch display section when the touch pad region is assigned to the specific region; (c) executing a specific processing according to a touch operation in the touch pad region; and (d) disabling a touch operation, when the touch operation is performed in the touch display section other than the assigned touch pad region.

Other aspects and advantages of the present invention will be apparent from the following description, the drawings and the claims.

### BRIEF DESCRIPTION OF DRAWINGS

Exemplary embodiments of the present invention will be described in detail based on the following figures, wherein:
Fig. 1 is a block diagram illustrating basic configuration elements of a portable terminal apparatus (handy terminal) for use in such applications as stock control;
Fig. 2A is a diagram illustrating a display state of a touch display section 5 ;
Fig. 2B is a diagram illustrating a touch pad region TP that has been assigned to a specific region on the touch display section 5;
Fig. 3A to 3C are diagrams illustrating display of a touch pad region TP and a touch pad pointer PT displayed with the touch pad region TP, when the touch pad region TP is assigned and displayed on the touch display section 5;
Fig. 4 is a flow chart explaining operation when initiating execution in response to a touch pad execution instruction (an operation that is a feature of the present exemplary embodiment); and
Fig. 5 is a flow chart of operation continuing from Fig. 4.

### DETAILED DESCRIPTION OF EXEMPLARY EMBODIMENTS

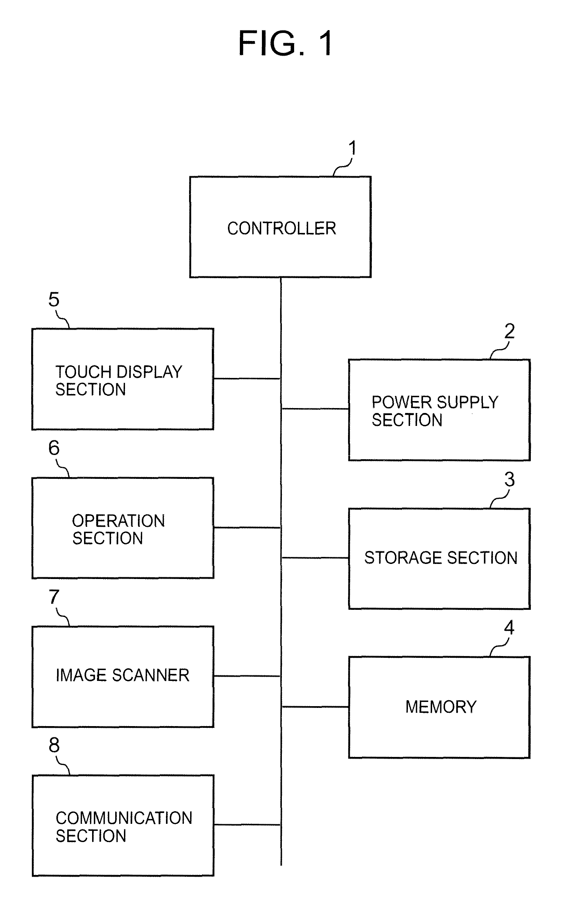

Explanation follows regarding embodiments described herein, with reference to Fig. 1 to Fig. 5.
Fig. 1 is a block diagram illustrating basic configuration elements of a portable terminal apparatus (handy terminal) for use in such applications as stock control. The portable terminal apparatus has a thin rectangular shaped casing and is configured including a core central controller (including a Central Processing Unit (CPU)) 1, a power supply section 2, a storage section 3, memory 4, a touch display section 5, an operation section 6, an image scanner 7, and a communication section 8. The controller 1 is operated by power supplied from the power supply section (a rechargeable battery) 2, and performs overall operation control of the portable terminal apparatus according to various programs stored in the storage section 3.

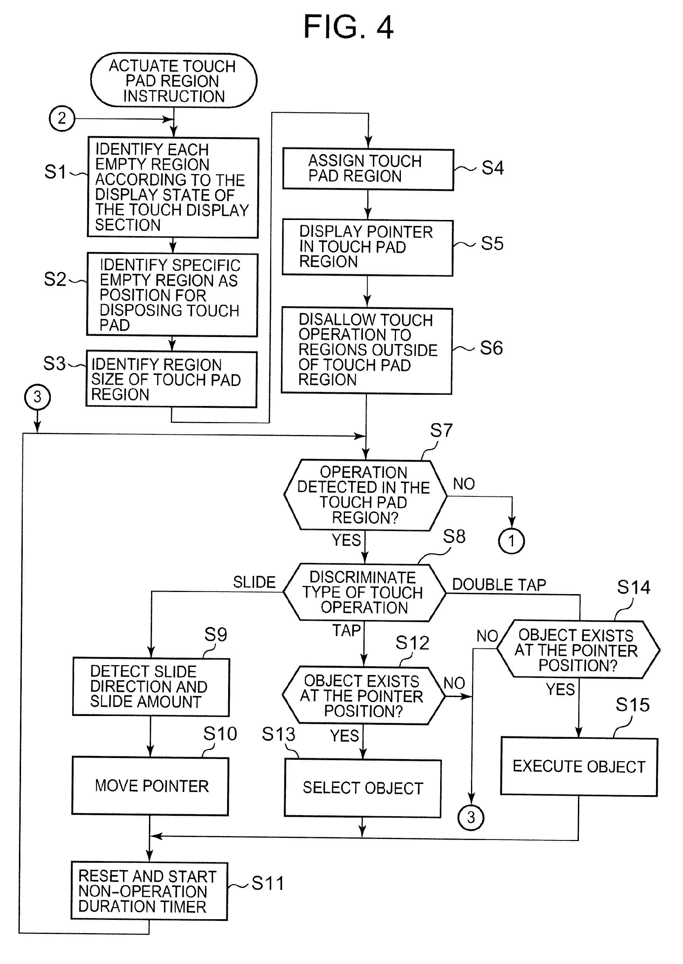

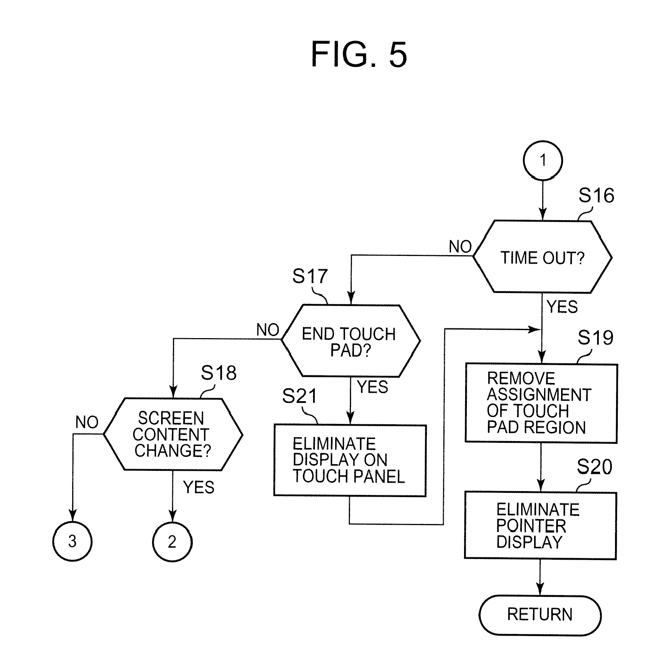

The storage section 3 is, for example, configured including ROM or flash memory, and stores an Operating System (OS), a program, described later, for executing the present exemplary embodiment according to the operational sequence illustrated in Fig. 4 and Fig. 5, and various application programs. The storage section 3 may, for example, be configured including detachable portable memory (storage media) such as an SD card or an IC card. While not illustrated, configuration may also be made including a storage region at the side of a specific external server that is connected thereto through a communication function. The memory 4 is a work area for temporarily storing various types of data required for operation of the portable terminal apparatus, such as time data and flag data.

The touch display section 5 is a large touch display section taking up substantially all of the surface area of a thin rectangular shaped casing. The touch display section 5 configures touch input means (a touch screen) for detecting a position operated by touching such as with a finger or pen, and inputting coordinates of the detected position, and includes a display panel 5a and a touch panel 5b. The touch panel 5b may be configured using any suitable technology, such as electrostatic capacitance, resistive membrane, electromagnetic induction or piezoelectric technology. The display panel 5a employs for example a high precision liquid crystal display or Electro Luminescence (EL) display to display function names serving as software keys, and objects (such as icons and links). As explained later, the controller 1 analyzes the current display state on the touch display section 5 when an instruction to assign a touch pad region is received, so as to assign the touch pad region in a specific region according to the display state.

While not illustrated, the operation section 6 is equipped with various push-button keys, such as a power ON/OFF button, and the controller 1 performs processing according to input operation signals from the touch display section 5 and the operation section 6. The image scanner 7 captures code data using an image sensor such as a CCD or CMOS. The controller 1 reads the code data by analyzing the image data captured by the image scanner 7. The communication section 8 is connected to a host device (not shown in the drawings) through a wireless Local Area Network (LAN) such that exchange of data is performed between the host device and the portable terminal apparatus.

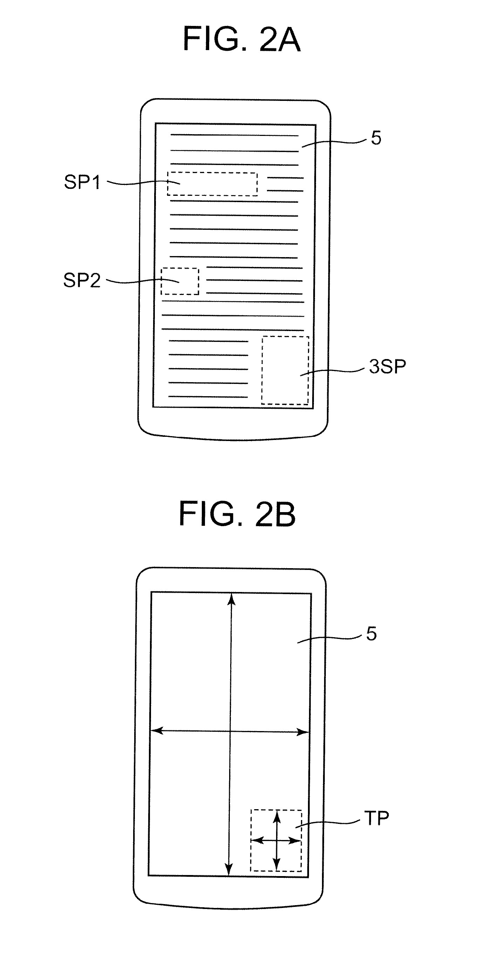

Fig. 2A is a diagram illustrating a display state on the touch display section 5, with SP1 to SP3 in the drawing illustrating empty regions of a specific size or greater. Namely, the controller 1 analyzes the display state of the data being displayed on the touch display section 5, so as to identify, based on this display state, empty regions of a specific size or greater where no data is being displayed. Reference here to empty regions of a specific size or greater means, for example, a size of 1/8 the size of the touch display section 5 or greater, however obviously there is no limitation thereto. Fig. 2B is a diagram illustrating a touch pad region TP assigned to a specific region on the touch display section 5. On receipt of an instruction to assign a touch pad region, the controller 1 assigns the touch pad region TP so as to be displayed in a specific empty region.

When such assignment is performed, out of the empty regions SP1 to SP3 illustrated in Fig. 2A, assignment is made so as to prioritize assigning the touch pad region TP to the empty region SP3 that is disposed at, or in the vicinity of, an edge portion of the touch display section 5 (see Fig. 2B). Assigned is made according to the size of the empty region SP3 when the touch pad region TP is assigned. For example, in the present exemplary embodiment, a touch pad region TP of size that is 1/4 the size of the touch display section 5 or smaller is assigned and displayed in the range of the size of the empty region SP3. In the drawings the crossed arrow shapes shown in the touch pad region TP and in the touch display section 5 indicate the extent of the range in which operation in the touch pad region TP is treated as being operation in the range in the touch display section 5. In this example the entire range in the touch pad region TP is corresponded against the entire range of the touch display section 5.

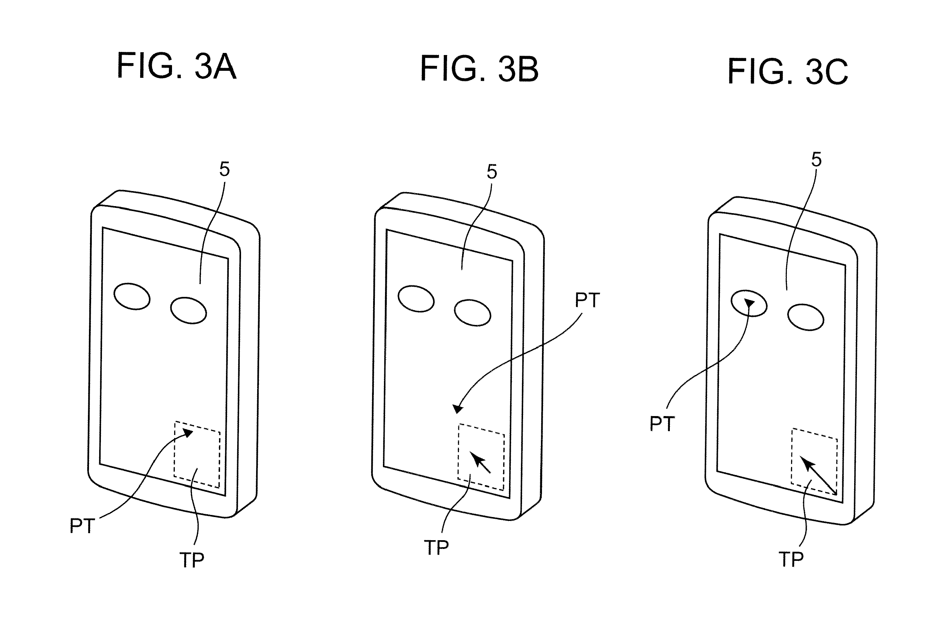

Figs. 3A to Fig. 3C are diagrams illustrating display of a touch pad region TP together with display of a touch pad pointer PT displayed in the touch pad region TP when a touch pad region TP is assigned and displayed in the touch display section 5. The black triangle marks in the drawings illustrate the touch pad pointer PT, and the touch pad region TP is initially displayed together with a pointer in the touch pad region TP (see Fig. 3A). In this example, when a touch operation (sliding operation) is performed inside the touch pad region TP, the touch pad pointer PT is moved in the movement direction of the touch operation (see Fig. 3). When further touch operation (sliding operation) is performed in the touch pad region TP, the touch pad pointer PT is again moved according to the touch operation. Fig. 3C illustrates a state in which the touch pad pointer PT has arrived at a display position of a desired object (such as an icon or link). In this state the object is selected and executed according to whether or not one touch operation (a tap operation) is performed in the touch pad region TP or whether or not a two consecutive touch operation (a double tap operation) is performed in the touch pad region TP.

Explanation follows regarding an outline operation of the portable terminal apparatus according to the present exemplary embodiment, with reference to the flow charts in Fig. 4 and Fig. 5. Each of the functions illustrated in the flow charts are stored in a readable program code format, and operation is successively executed according to the program code. Configuration may be made such that operation is successively executed according to the above program code as transmitted via a transmission medium, such as a network. Namely, the operation that is a feature of the present exemplary embodiment can be executed by utilizing a program and/or data that is either stored on a storage medium and/or supplied from outside through a transmission medium.
Note that Fig. 4 and Fig. 5 are flow charts illustrating outline operation of characteristic portions of the present exemplary embodiment from out of the overall operation of the portable terminal apparatus, and processing returns to a main flow (not shown in the drawings) of the overall operation when leaving the flow shown in Fig. 4 and Fig. 5.

Fig. 4 and Fig. 5 are flow charts for explaining the operation for execution initiation according to a touch pad execution instruction (a characteristic operation of the present exemplary embodiment). Namely, when a specific touch operation is performed on the touch display section 5, the controller 1 takes this as an instruction to activate a touch pad region TP and initiates execution of the flow in Fig 4 and Fig. 5. First, the display content current being displayed on the touch display section 5 is analyzed, and then empty region(s) of a specific size or greater are identified according to the display state (step S1).

Then, when plural empty regions are identified as empty regions to possibly act as the region for disposing a touch pad region TP, an empty region that is present at, or in the vicinity of, an edge portion of the touch display section 5 is identified from the plural empty regions as the region for disposing the touch pad region TP (step S2). In this example, as shown in Fig. 2B, the touch pad region TP is assigned to the empty region SP3 present at, or in the vicinity of, an edge portion of the touch display section 5. Then the size of the touch pad region TP is identified based on the size of the empty region identified as described above (step S3). The touch pad region TP of the determined size is then assigned and disposed in the identified empty region (step S4). A pointer is also disposed and displayed in the touch pad region TP according to the disposed and displayed touch pad region TP (step S5). Touch operation to the touch display section 5 is then disallowed, namely processing is performed so as to disallow touch operation to all regions in the touch display section 5 other than in the touch pad region TP (step S6).

In this state, when touch operation is performed in the touch pad region TP (step S7: YES), the type of touch operation that has been performed is discriminated, such as whether or not a sliding operation has been performed, whether or not a tap operation has been performed, or whether or not a double tap operation has been performed (step S8). When sliding operation has been performed (step S8) the slide direction and slide amount are detected (step S9), and the touch pad pointer PT is moved and displayed according to the slide direction and slide amount (step S10). In such a case the movement and display of the touch pad pointer PT are not limited to inside the touch pad region TP, and the touch pad pointer PT may be moved and displayed outside the touch pad region TP according to the slide direction and the slide amount. Then a non-operation duration timer (not shown in the drawings) for measuring non-operation duration is reset and started (step S11), before processing than returns to step S7.

Processing transitions to step S12 when touch operation has been performed on the touch pad region TP (step S8), and investigation is made into whether or not an object is being displayed at the position of the touch pad pointer PT being displayed in a region of the touch display section 5 other than the touch pad region TP. Unless there is an object being displayed at this position (step S12: NO) processing transitions to step S7 since the current tap operation is disallowed. However, if an object is being displayed at the position of the touch pad pointer PT (step S12: YES) then this object is selected for processing (step 13). Then, after resetting and starting the non-operation duration timer (not shown in the drawings) (step S11), processing returns to step S7.

Processing transitions to step S 14 when a double tap operation has been performed in the touch pad region TP (step S8), investigation is made into whether or not an object is being displayed at the position of the touch pad pointer PT that is being displayed in a region on the touch display section 5 other than the touch pad region TP. Unless there is an object being displayed at this position (step S14: NO) processing transitions to step S7 since the current double tap operation is disallowed. However, if an object is being displayed at the position of the touch pad pointer PT (step S14: YES) then processing is executed according to the object, such as an icon or link (step S15). Then, after resetting and starting the non-operation duration timer (not shown in the drawings) (step S11), processing returns to step S7.

From then on, processing is repeated each time a touch operation is performed (step S7: YES) according to the type of touch operation (step S8), this being processing to move the touch pad pointer PT (step S10), processing to select an object being displayed at the position of the touch pad pointer PT (step S13), or processing to execute an object being displayed at the position of the touch pad pointer PT (step S 15).

However, when a touch operation is not performed (step S7: NO), the flow transitions to Fig. 5, the non-operation duration timer investigates whether time out has occurred (step S 16), investigation is made into whether or not ending the touch pad region has been instructed by user operation or automatically (step S 17), and investigation is performed into whether or not a change in the screen content of the touch display section 5 (such as screen change or scroll) has been instructed by user operation or automatically (step S18). Processing returns to step S7 of Fig. 4 when all of steps S16, S 17 and S18 are determined as "NO".

When the non-operation duration timer has timed out (step S16: YES) then the touch pad region TP is de-assigned (the touch pad region TP is eliminated) (step S19), and displaying of the touch pad pointer PT is eliminated (step S20). When ending the touch pad has been instructed (step S 17: YES) display of the touch pad region TP on the touch display section 5 is eliminated (step S21), then the touch pad region TP is de-assigned (the touch pad region TP is eliminated) (step S19), and display of the touch pad pointer PT is eliminated (step S20). Then processing leaves the flow of Fig. 4 and Fig. 5. Processing returns to the first step, step S1, of Fig. 4 when a change in screen content has been instructed (step S 18: YES), and the above operations are repeated.

According to the above, the controller 1 in the present exemplary embodiment assigns the touch pad region TP to a specific region within the touch display section 5. Then, when a touch operation is performed in the touch pad region TP in a state in which the touch pad pointer is displayed at a specific position in the touch display section 5, processing corresponding to the touch operation is executed. However, when a touch operation is performed on the touch display section 5 outside of the touch pad region TP, the touch operation is treated as invalid. Accordingly, mistaken operation can be efficiently suppressed in a state in which the touch pad region TP is assigned in the touch display section 5, enabling easy use even with single handed operation.

The current display state on the touch display section 5 is analyzed when there is an instruction to assign the touch pad region TP, such that the touch pad region TP is assigned inside a specific region according to the display state. The touch pad region TP can thereby be assigned with relation to the display state of the touch display section 5.

Since the touch pad region TP is assigned to an empty region where there is no data being displayed on the touch display section 5, the touch pad region TP can be assigned to a location that does not affect the display contents.

Since the touch pad region TP is assigned in priority to an empty region at, or in the vicinity of, an edge portion of the touch display section 5, the touch pad region TP can be assigned to a location where it is easy to operate.

When the touch pad region TP is assigned to an empty region on the touch display section 5, assignment is performed such that the touch pad region TP is assigned according to the size of the empty region, so the touch pad region TP can be made to correspond to the size of the empty region, and efficient utilization of the empty region can be made.

Since configuration is made such that the initial display position of the touch pad pointer PT is shown within the touch pad region TP, configuration is made such that there is a clear correspondence relationship between the touch pad region TP and the touch pad pointer PT.

Configuration is made such that processing is performed according to the type of touch operation in the touch pad region TP, this being processing to move the touch pad pointer PT, processing to select an object being displayed at the position of the touch pad pointer PT, or processing to execute the object being displayed at the position of the touch pad pointer PT. A user is hence able instruct execution of processing according to these types simply by changing the type of touch operation imparted to the touch pad region TP.

In the present exemplary embodiment, configuration is made such that display in the touch pad region TP is employed as the initial display position of the touch pad pointer PT, however configuration may be made such that display is in the vicinity of the touch pad region TP. In such cases, by displaying in the vicinity of the touch pad region TP, not only is the correspondence relationship between the touch pad region TP and the touch pad pointer PT made clear, but also the movement amount of the touch pad pointer PT is made smaller than when displayed in the touch pad region TP.

In the above exemplary embodiment, configuration is made such that actuation of the touch pad region TP is taken as being instructed when a specific touch operation is performed on the touch display section 5. However, configuration may be made such that actuation of the touch pad region TP is taken as being instructed when a specific push button key is operated on the operation section 6. User operation may be made by touch operation and/or push button operation, or another means such as voice commands may also be employed.

In the above exemplary embodiment an example is given of application to a handy terminal as a portable terminal apparatus, however there is no limitation thereto and application may be made to another device such as a PDA, digital camera or music player.

In the above exemplary embodiment reference to "apparatus" and "section" does not imply a limitation to provision in a single case, and separation according to function may be made into plural cases. Each of the steps described in the above flow charts is not limited to time based serial processing, and configuration may be made such that plural steps are performed in parallel, or configuration made in which processing is performed in separate isolation.

## Claims

1. A portable terminal apparatus comprising a touch display section mounted with a touch panel, the apparatus comprising:
a touch pad assignment section configured to assign a touch pad region to a specific region in the touch display section;
a pointer display section configured to display a touch pad pointer at a specific position on the touch display section when the touch pad region is assigned by the touch pad assignment section;
a processor configured to execute a specific processing according to a touch operation in the touch pad region; and
a touch controller configured to disable a touch operation, when the touch operation is performed in the touch display section other than the touch pad region assigned by the touch pad assignment section.

2. The apparatus of claim **1**,
wherein the touch pad assignment section is configured to analyze a current display state on the touch display section and assign the touch pad region to the specific region in the touch panel display according to the display state.

3. The apparatus of claim **2,**
wherein the touch pad assignment section is configured to assign the touch pad region to an empty region in the touch panel display, wherein any data is not displayed in the empty region.

4. The apparatus of claim **3,**
wherein the empty region comprises a plurality of empty regions, and
the touch pad assignment section is configured to assign the touch pad region to an empty region closest to an edge portion of the touch display section among the plurality of empty regions.

5. The apparatus of claim **3** or **4,**
wherein the touch pad assignment section is configured to assign the touch pad region to the empty region such that a size of the touch pad region is substantially equal to a size of the empty region.

6. The apparatus of any one of claims **1** to **5,** wherein
the pointer display section is configured to display the touch pad pointer in or near the touch pad region.

7. The apparatus of any one of claims **1** to **6,** further comprising:
a discrimination section configured to discriminate a type of the touch operation when the touch operation is performed in the touch pad region, and
wherein the processor is configured to: a) move the touch pad pointer; b) select an object overlapped with the touch pad pointer; or c) perform a specific processing on the object, according to the type of touch operation,

8. A computer-readable medium storing a program for causing a computer to perform predetermined operations, the operations comprising:
(a) assigning a touch pad region to a specific region in a touch display section;
(b) displaying a touch pad pointer at a specific position on the touch display section when the touch pad region is assigned to the specific region;
(c) executing a specific processing according to a touch operation in the touch pad region; and
(d) disabling a touch operation, when the touch operation is performed in the touch display section other than the assigned touch pad region.
